# DEMANDE DE BREVET EUROPEEN

(11) **EP 0 589 788 A1**
(43) Date de publication de la demande: **30.03.1994**
(21) Numéro de dépôt: 93402318.5
(22) Date de dépôt: 22.09.1993
(51) Int. Cl.: B28D 1/22, B28D 7/04, B23Q 3/00, G01B 5/02

(54) **Machine à couper les carreaux comportant notamment un bras réglable de positionnement des carreaux**

(30) Priorité: 25.09.1992 FR 9211489
(71) Demandeur: TOMECANIC, F-78410 Aubergenville (FR)
(72) Inventeur: Thiriet, Abel, F-39100 Dole (FR)
(74) Mandataire: Hoisnard, Jean-Claude

(57) **Abrégé**

L'invention est relative à une machine à couper les carreaux comportant: un organe de coupe (5); une face principale de butée (6) du bâti permettant l'appui d'un côté (3A) du carreau (3); et, un support (11) monté coulissant perpendiculairement (T) à l'axe de coupe (4) et supportant un premier bras (15) présentant une première face (15A) parallèle à l'axe de coupe (4) permettant l'appui (3B) du carreau à couper (3).

Selon l'invention, un deuxième bras (16), pivotant sur le premier bras (15), comporte une deuxième face (16A) d'appui (3B) d'un carreau à couper (3), cependant qu'une graduation angulaire (20) solidaire de l'un (16) des deux bras, permet de régler l'orientation angulaire de la deuxième face (16A) par rapport à la première face (15A) et qu'un dispositif (19) de blocage du pivotement relatif des deuxdits bras permet le blocage dudit pivotement.

En plus, le support (11) du bras (15) est lui-même muni d'une deuxième graduation (13) mobile en regard d'au moins un repère (14) que comporte le bâti (1), l'échelle de cette deuxième graduation (13) étant identique à celle de la première graduation (7), ladite deuxième graduation (13) s'étendant en sens inverse de la première graduation (7) et ayant une valeur d'origine (G13), qui, est identique à la valeur (G7) de fin de la première graduation (7), de sorte qu'une distance (L3B) de la première face de butée (15A) à l'axe de coupe (4) supérieure à la valeur (G7) de fin de la première graduation (7) est susceptible d'être mesurée par lecture de la position relative de la deuxième graduation (13) en regard dudit repère (14).

## Description

Est déjà connue une machine à couper les carreaux, notamment de faïence, comportant: un bâti présentant un fond plan destiné à supporter un carreau en vue de sa coupe; un organe de coupe monté coulissant par rapport audit bâti parallèlement à un axe longitudinal du bâti, formant axe de coupe; une face principale de butée du bâti, perpendiculaire à l'axe de coupe, permettant l'appui d'un côté dudit carreau; et, un support monté coulissant perpendiculairement à l'axe de coupe et supportant un premier bras qui présente une première face de butée parallèle à l'axe de coupe, permettant l'appui du carreau à couper; le support et le premier bras, solidaires l'un de l'autre formant une équerre.

Le problème que pose ce type de machine est la réalisation de coupes présentant une orientation déterminée. Sont notamment longues à réaliser les coupes obliques par rapport à l'un des côtés rectilignes d'un carreau, mais aussi celles parallèles à un tel côté. La raison est que les machines connues ne comportent pas de moyens de réglage de l'obliquité de la coupe qui soient simples et efficaces.

C'est pour remédier aux insuffisances des machines connues que, selon l'invention, une telle machine comporte en outre un deuxième bras qui est monté pivotant sur le premier bras autour d'un arbre de pivotement perpendiculaire au fond du bâti, ledit deuxième bras comportant une deuxième face de butée permettant l'appui d'un carreau à couper, cependant qu'une graduation angulaire est solidaire de l'un des premier et deuxième bras et permet de régler l'orientation angulaire relative de la deuxième face de butée par rapport à la première face de butée et qu'un dispositif de blocage du pivotement relatif des deuxdits bras permet le blocage dudit pivotement.

Les avantageuses dispositions suivantes sont en outre de préférence adoptées:
- la graduation angulaire est supportée par le deuxième bras;
- la graduation angulaire s'étend le long d'un arc de cercle centré sur l'arbre de pivotement, la deuxième face de butée étant limitée par son intersection avec ledit arc de cercle;
- le dispositif de blocage du pivotement comprend une rainure, ménagée dans l'un desdits premier et deuxième bras, et, un ergot, monté sur l'autre desdits bras, engagé dans la rainure, associé à un mécanisme de commande du blocage du pivotement relatif desdits bras;
- ladite deuxième face de butée est susceptible d'être placée dans une configuration particulière dans laquelle elle est parallèle audit axe de coupe, ledit ergot étant lui-même placé en une position particulière dans la rainure, le deuxième bras possédant dans ladite configuration particulière une extrémité disposée au-delà de l'axe de pivotement par rapport au support du premier bras, cependant que la rainure s'étend, à partir de ladite position particulière de l'ergot au moins dans un premier sens permettant un déplacement ultérieur de l'ergot dans la rainure auquel correspond un débattement de ladite extrémité du deuxième bras l'écartant de l'axe de coupe pour une obliquité de la deuxième face de butée par rapport à l'axe de coupe comprise entre 0° et moins de 90° C à partir de la position dans laquelle ladite deuxième face de butée est parallèle à l'axe de coupe;
- la face principale de butée du bâti est munie d'une fente de réception d'une arête d'un carreau à couper, centrée dans un plan perpendiculaire au fond du bâti et contenant l'axe de coupe;
- le bâti comporte deux dispositifs d'immobilisation du support, qui sont disposés de part et d'autre de l'axe de coupe, l'un quelconque de ces deux dispositifs d'immobilisation étant apte à immobiliser ledit support;
- le bâti est muni d'une première gradutation, qui s'étend parallèlement à la direction de coulissement du support et qui est susceptible d'indiquer la distance séparant la première face de butée du bras de l'axe de coupe;
- le support du bras est lui-même muni d'une deuxième graduation mobile en regard d'au moins un repère que comporte le bâti, l'échelle de cette deuxième graduation étant identique à celle de la première graduation, ladite deuxième graduation s'étendant en sens inverse de la première graduation et ayant une valeur d'origine, qui est identique à la valeur de fin de la première graduation, de sorte qu'une distance de la première face de butée à l'axe de coupe supérieure à la valeur de fin de la première graduation est susceptible d'être mesurée par lecture de la position relative de la deuxième graduation en regard dudit repère.

L'avantage principal des machines conformes à l'invention réside dans leurs possibilités d'utilisation: l'utilisateur a à sa disposition une machine qui, instantanément, est apte à permettre la réalisation de toutes coupes d'un carreau, aussi bien parallèles à l'un des côtés, qu'obliques par rapport à ce côté, sans nécessité de manipulations complexes. Il y a donc à la fois, d'une part polyvalence et simplicité d'utilisation, d'autre part, simplicité de la machine.

L'invention sera mieux comprise et des caractéristiques secondaires et leurs avantages apparaîtront au cours de la description de réalisations donnée ci-dessous à titre d'exemple.

Il est entendu que la description et les dessins ne sont donnés qu'à titre indicatif et non limitatif.

Il sera fait référence aux dessins annexés, dans lesquels:
- les figures 1, 2 et 3 sont des vues de dessus d'une même machine conforme à l'invention dans trois configurations distinctes d'utilisation;
- la figure 4 représente une variante de réalisation de l'invention, dans une configuration analogue à celle de la figure 3; et,
- la figure 5 représente la machine de la figure 4 dans une configuration particulière, différente de celle de cette figure 4.

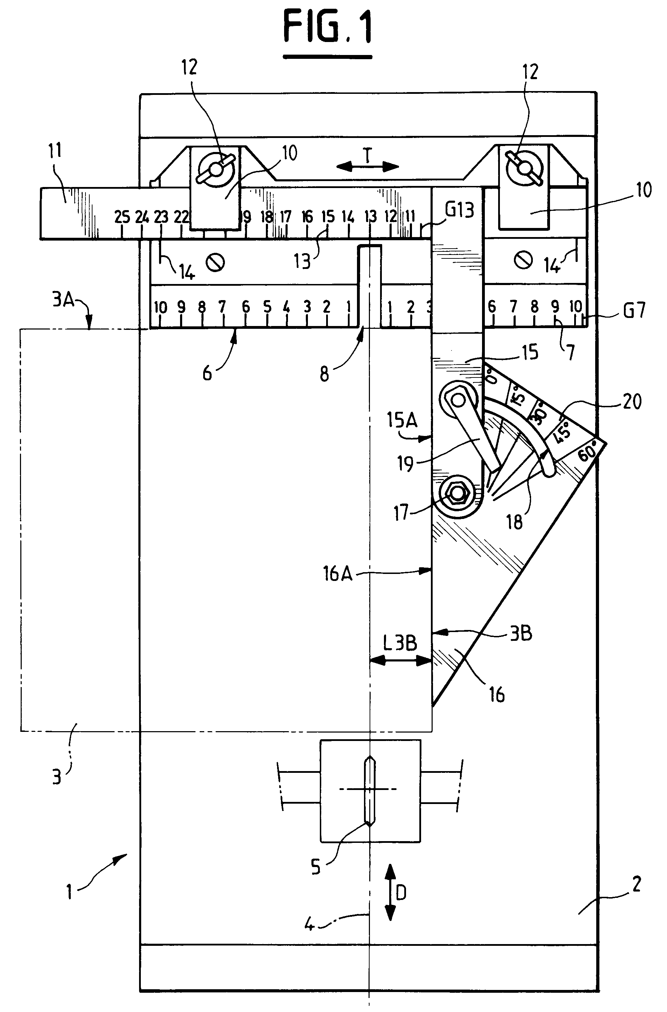

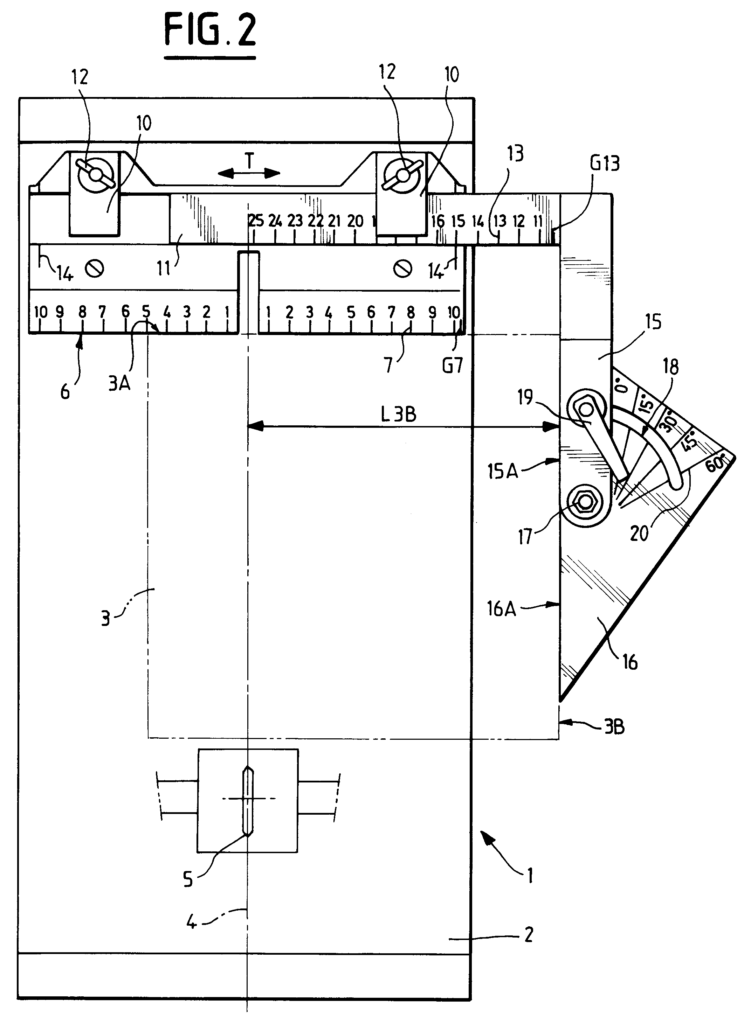

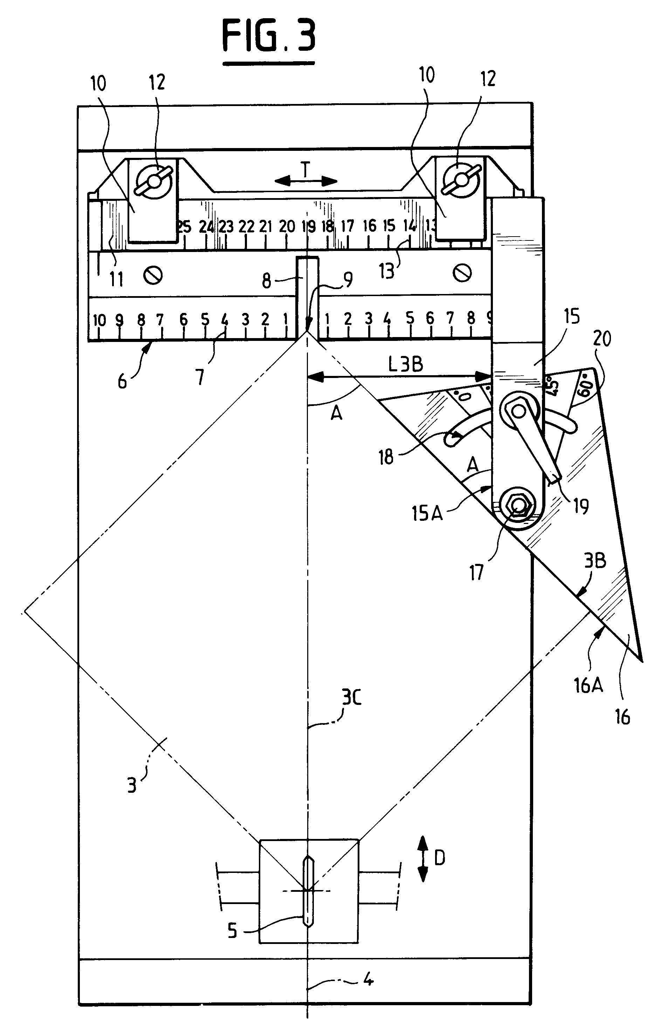

La machine à couper les carreaux de faïence, de grès, ou de matériaux analogues, représentée, comporte:
- un bâti 1 comportant un plan 2 de pose d'un carreau 3 à couper;
- un axe de coupe 4 de ce bâti;
- un organe de coupe 5, monté coulissant parallèlement à la direction D de l'axe de coupe 4, dans le plan perpendiculaire au plan 2 et contenant l'axe de coupe 4;
- un rebord transversal 6, perpendiculaire à l'axe de coupe 4, solidaire du bâti 1, constituant une face principale de butée 6 sur laquelle un premier côté 3A du carreau 3 est susceptible d'être mis en appui, et est effectivement mis en appui dans les configurations des figures 1 et 2;
- une première graduation 7, qui, dans l'exemple représenté, est double et s'étend symétriquement par rapport à l'axe de coupe 4, indiquant, dans la configuration de la figure 1, la distance L3B séparant un deuxième côté 3B du carreau 3 de l'axe de coupe 4;
- une fente 8 de réception d'une arête 9 du carreau 3, centrée sur l'axe de coupe 4, ménagée dans le rebord 6;
- deux brides 10 d'immobilisation d'une règle support 11, munies de leur vis d'immobilisation 12, aptes à serrer ladite règle support 11 sur le bâti 1 et d'en assurer l'immobilisation par rapport au bâti, disposées symétriquement de part et d'autre de l'axe de coupe 4, la règle support 11 pouvant de ce fait être immobilisée par rapport au bâti 1, par l'une seulement des deux brides 11 (figure 1 et figure 2), ou par les deux brides ensemble (figure 3);
- la règle support 11, lorsque les brides 11 n'en réalisent pas l'immobilisation, est apte à coulisser par rapport au bâti parallèlement à la direction transversale T, qui est parallèle au plan 2 et perpendiculaire à l'axe de coupe 4, en reposant sur ce bâti;
- une deuxième graduation 13 est supportée par la règle support 11, est réalisée à la même échelle (mêmes unités de mesure de longueurs) que la première graduation 7, est associée à la partie droite (figures 1, 2 et 3) de la première graduation 7, en s'étendant en sens inverse de cette partie de la première graduation (la partie droite de la première graduation croît de la gauche vers la droite, alors que la deuxième graduation 13 croît de la droite vers la gauche);
- deux repères 14, gravés ou peints sur le bâti 1, disposés symétriquement par rapport à l'axe de coupe 4 et en regard de la deuxième graduation 13;
- la valeur G13 de début de la deuxième graduation 13 étant égale à la valeur G7 de la fin de la partie droite de la première graduation 7, de sorte que, lorsque G7 est disposé en regard du repère 14, G7 et G14 sont situés sur une même droite parallèle à l'axe de coupe 4; dans cette position (figure 3), la distance L3B peut être lue sur la première graduation; lorsque, par contre, la distance du côté 3B du carreau 3 à l'axe de coupe 4 devient supérieure à G7, la première graduation ne permet plus de mesurer cette distance, mais L3B peut par contre être lue sur la deuxième graduation, celle-ci permettant la mesure à partir de G13, c'est-à-dire aussi à partir de la fin G7 de la partie de droite de la première graduation 7;
- un premier bras 15 est fixé à l'extrémité de droite de la règle support 11, avec laquelle il forme une équerre à 90°, en ayant une première face de butée 15A sur laquelle le côté 3B du carreau peut être mis en appui; la distance L3B, lorsqu'elle est inférieure à G7 étant lue (figures 1 et 3) à l'intersection de la partie de droite de la première graduation avec la première face de butée 15A; la première face de butée 15A est par ailleurs parallèle à l'axe de coupe 4;
- un deuxième bras 16, présentant une deuxième face de butée 16A perpendiculaire au plan 2 et contenue dans les configurations des figures 1 et 2 dans le même plan que la première face de butée 15A, est monté pivotant par rapport au premier bras 15 au moyen d'un arbre de pivotement 17;
- le deuxième bras 16 est monté en dessous du premier bras 15 et comporte une rainure 18 conformée en un arc de cercle centré sur l'arbre de pivotement 17, un doigt de guidage étant introduit dans cette rainure et permettant de bloquer sélectivement le pivotement du deuxième bras par rapport au premier bras, par l'intermédiaire d'une poignée de commande 19, et d'un dispositif à cliquet connu en soi;
- enfin, ce deuxième bras supporte une graduation angulaire 20, qui permet le réglage de l'orientation du deuxième bras 16 par rapport au premier bras 15 par le choix de l'angle A compris entre les première 15A et deuxième 16A faces de butée; lorsque ces faces de butée sont contenues dans le même plan (figures 1 et 2), l'angle A est égal à zéro, ce qu'indique la graduation 20.

A noter que ces mesures d'angles sont rarement précises, et qu'il est préférable, pour aligner la diagonale d'un carreau carré 3, dont une arête 9 est reçue dans la fente 8, avec l'axe de coupe 4, d'effectuer le réglage précis de la position du carreau, par exemple visuellement, ou par un autre moyen mécanique précis, compatible avec la mise en oeuvre de la présente invention.

Avec la machine décrite, l'utilisateur peut:
- couper une bande rectangulaire du carreau de largeur L3B inférieure à G7 (figure 1) en immobilisant la règle support 11 avec la bride 10 de gauche, en mettant appui le côté 3B du carreau 3 sur la première face de butée 15 du premier bras 15, qui est, en permanence, ngoureusement parallèle à l'axe de coupe 4, et en mesurant L3B au moyen de la partie de droite de la première graduation 7;
- couper une bande rectangulaire du carreau de largeur L3B supérieure à G7 (figure 2) en immobilisant la règle support 11 avec la bride 10 de droite, en mettant en appui le côté 3B du carreau 3 sur la première face de butée 15A du premier bras 15, et en mesurant L3B au moyen de la deuxième graduation 13 (la valeur L3B est celle de cette graduation disposée en regard du repère 14 de droite);
- réaliser n'importe quelle coupe 3C faisant un angle A par rapport au côté 3B du carreau, que cette coupe oblique soit confondue avec une diagonale du carreau (figure 3), ou que l'arête 9 du carreau 3 prenne appui sur la face principale de butée 6 au lieu d'être reçue dans la fente 8, et en mettant le côté 3B en appui sur la deuxième face de butée 16A tel que représenté sur la figure 3;
- de réaliser les coupes de carreaux de toutes dimensions, compte-tenu notamment du débattement de coulissement de la règle support 11 parallèlement à la direction T et à la possibilité de l'immobiliser par l'une, ou par l'autre, ou par les deux brides 10.

En variante, la graduation angulaire 20 pourrait être supportée par le premier bras 15, un repère fixe par rapport au deuxième bras 16 permettant alors le réglage de l'angle A.

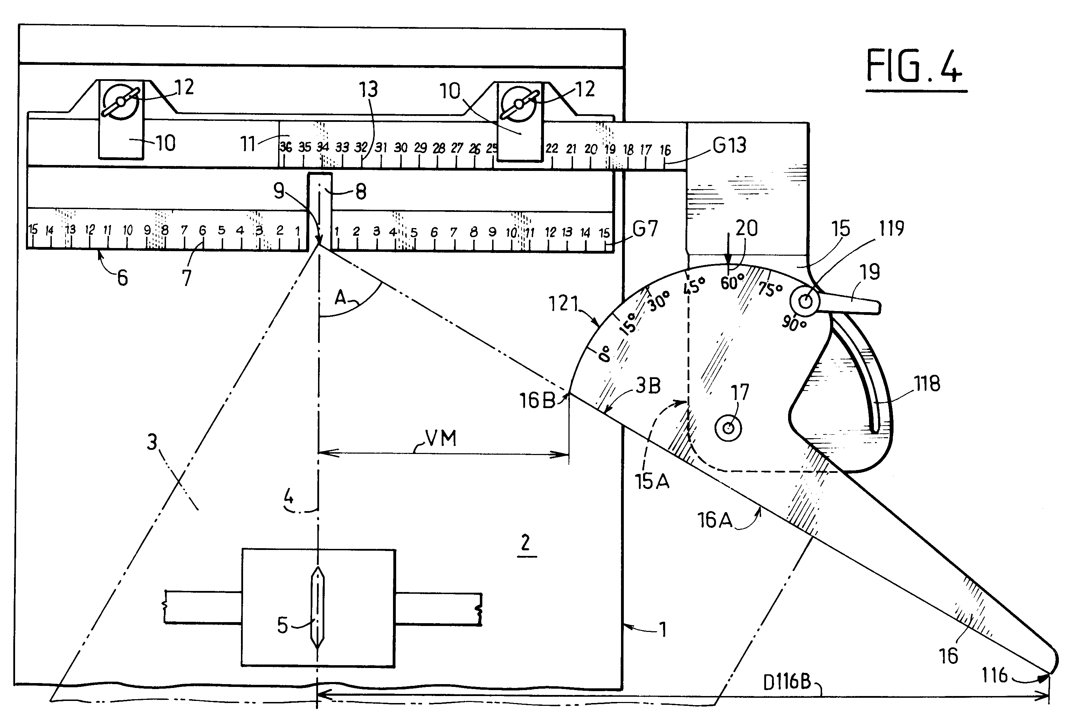

La figure 4 représente une autre variante de réalisation, dans laquelle la rainure de guidage du pivotement du deuxième bras 16 par rapport au premier bras 15 est ménagée dans le premier bras 15, repérée par la référence 118, conformée en un arc de cercle centré sur l'arbre de pivotement 17, et associée à la poignée de commande 19 de blocage sélectif du pivotement.. Un ergot 119, associé à la poignée de commande 19, est introduit dans la rainure 118. La graduation angulaire 20, supportée par le deuxième bras 16, s'étend selon un arc de cercle 121 également centré sur l'arbre de pivotement 17. Le deuxième bras 16 est en outre limité en 16B, le long de sa deuxième face de butée 16A, par l'intersection de l'arc de cercle 121 avec la deuxième face de butée 16A, ce qui limite son encombrement et permet ainsi l'obtention de la voie maximale VM réservée au passage du support de l'organe de coupe 5. Plus généralement, la graduation 20 s'étend le long d'une courbe convexe, dont l'intersection 16B avec la deuxième face de butée 16A est plus proche de l'arbre 17 que l'intersection de la droite support de graduation angulaire de la figure 3, ce qui permet une réduction de l'encombrement du support de cette graduation angulaire après un pivotement analogue à celui de la figure 4, et par conséquent l'obtention de la voie maximale VM de passage du support de l'organe de coupe 5. Il doit également être noté que, dans cette réalisation, le deuxième bras 16 est placé au-dessus du premier bras 15.

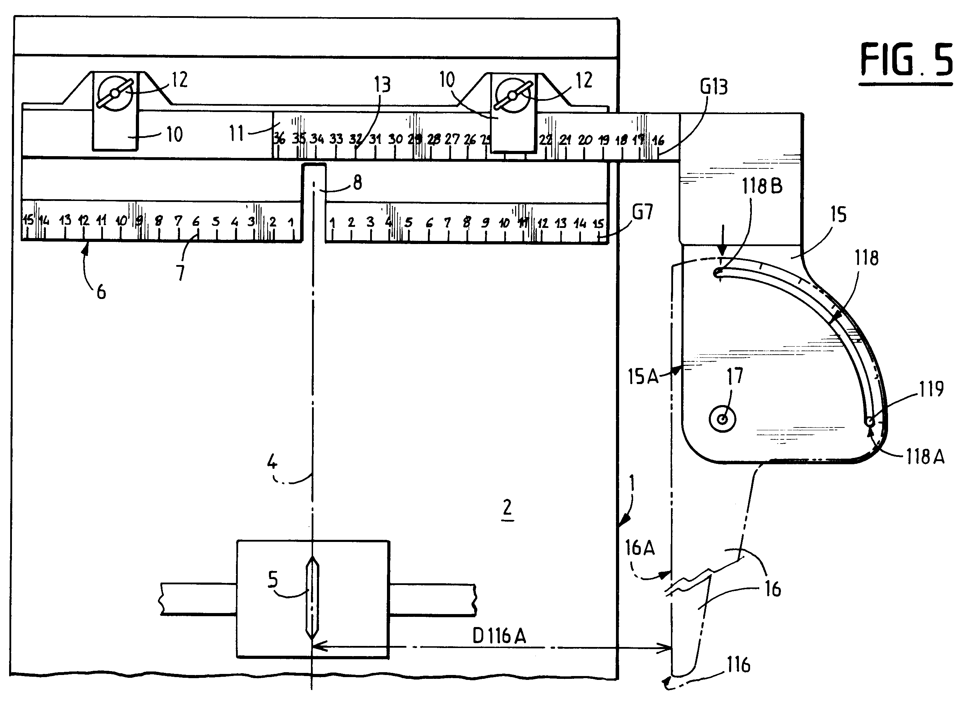

La figure 5 représente une configuration particulière de la machine à couper les carreaux de la figure 4. La vue représente le premier bras 15 en traits continus, et superposé en traits interrompus, le deuxième bras 16. La poignée de commande de blocage sélectif du pivotement n'est pas représentée par soucis de clarté, mais l'ergot 119 est représenté à l'intérieur de la rainure 118. Dans la configuration particulière représentée, l'ergot 119 est placé à une extrémité 118A de la rainure 118 et peut parcourir celle-ci jusqu'à son autre extrémité 118B, permettant de mettre en place un carreau à couper comme celà est représenté sur la figure 4, avec un angle A compris, au moins, entre 0 et moins de 90° C d'arc. A une position intermédiaire du deuxième bras 16, telle que celle représentée sur la figure 4, et donc à une position de l'ergot 119 dans la rainure 118, qui est intermédiaire entre les extrémités 118A et 118B de la rainure 118, correspond une position intermédiaire de l'extrémité 116 du deuxième bras 16, qui, dans la configuration particulière de la figure 5, est située au-delà de l'axe 17 par rapport à la règle support 11 et écartée d'une distance D116A de l'axe de coupe 4, lorsque la deuxième face de butée 16A est parallèle à cet axe de coupe 4, ladite position intermédiaire de l'extrémité 116 étant elle-même écartée de l'axe de coupe 4 d'une distance D116B supérieure à la distance D116A. Ceci permet, comme celà est représenté sur la figure 4, de dégager le plan 2 du support 1 et de permettre la pose d'un carreau 3 à couper. Cette disposition est avantageuse et est évidemment liée au choix des positions relatives de la rainure 118 et de l'ergot 119 qui y est introduit.

Cette disposition n'est par contre pas liée au choix d'avoir réaliser la rainure 118 dans le premier bras 15: il est aisément concevable, qu'en variante, une rainure ménagée dans le deuxième bras 16, recevant un ergot monté sur le premier bras 15, puisse permettre ladite disposition: il suffit, à partir de la configuration analogue à celle de la figure 5, que la rainure, alors ménagée dans le deuxième bras 16, s'étende dans le sens opposé à celui de la rainure 118 de la figure 5, l'ergot étant disposé par ailleurs près de l'emplacement de l'extrémité de la rainure repérée 118B sur la figure 5.

De même, en variante de la réalisation des figures 4 et 5, il est aisément concevable de placer la graduation 20 sur le premier bras 15, au lieu du deuxième bras 16.

L'invention n'est pas limitée aux réalisations représentées, mais en couvre au contraire toutes les variantes qui pourraient leur être apportées sans sortir de leur cadre, ni de leur esprit.

## Revendications

1. Machine à couper les carreaux, notamment de faïence, comportant:
un bâti (1) présentant un fond plan (2) destiné à supporter un carreau (3) en vue de sa coupe;
un organe de coupe (5) monté coulissant par rapport audit bâti parallèlement (D) à un axe longitudinal du bâti , formant axe de coupe (4);
une face principale de butée (6) du bâti, perpendiculaire à l'axe de coupe (4), permettant l'appui d'un côté (3A) dudit carreau (3); et
un support (11) monté coulissant perpendiculairement (T) à l'axe de coupe (4) et supportant un premier bras (15) qui présente une première face de butée (15A) parallèle à l'axe de coupe (4), permettant l'appui (3B) du carreau à couper (3);
le support (11) et le premier bras (15), solidaires l'un de l'autre, formant une équerre;
caractérisée en ce qu'un deuxième bras (16) est monté pivotant sur le premier bras (15) autour d'un arbre de pivotement (17) perpendiculaire au fond (2) du bâti (1), ledit deuxième bras (16) comportant une deuxième face de butée (16A) permettant l'appui (3B) d'un carreau à couper (3), cependant qu'une graduation angulaire (20) est solidaire de l'un (16) des premier et deuxième bras et permet de régler l'orientation angulaire (A) relative de la deuxième face de butée (16A) par rapport à la première face de butée (15A) et qu'un dispositif (19) de blocage du pivotement relatif des deuxdits bras permet le blocage dudit pivotement.

2. Machine selon la revendication 1,
caractérisée en ce que la graduation angulaire (20) est supportée par le deuxième bras lui-même (16).

3. Machine selon la revendication 2,
caractérisée en ce que la graduation angulaire (20) s'étend le long d'un arc de cercle (121), centré sur l'arbre de pivotement (17), la deuxième face de butée (16A) étant limitée par son intersection (16B) avec ledit arc de cercle.

4. Machine selon l'une quelconque des revendications 1 à 3,
caractérisée en ce que le dispositif de blocage du pivotement comprend une rainure (118), ménagée dans l'un (15) desdits premier et deuxième bras, et, un ergot (119), monté sur l'autre (16)) desdits bras, engagé dans la rainure (118), associé à un mécanisme (19) de commande du blocage du pivotement relatif desdits bras.

5. Machine selon la revendication 4,
caractérisée en ce que ladite deuxième (16A) face de butée est susceptible d'être placée dans une configuration particulière dans laquelle elle est parallèle audit axe de coupe (4), ledit ergot (119) étant lui-même placé en une position particulière dans la rainure (118), le deuxième bras (16) possédant dans ladite configuration particulière une extrémité (116) disposée au-delà de l'axe de pivotement (17) par rapport au support (11) du premier bras (15), cependant que la rainure (118) s'étend, à partir de ladite position particulière (118A) de l'ergot au moins dans un premier sens permettant un déplacement ultérieur de l'ergot (119) dans la rainure auquel correspond un débattement (D116B) de ladite extrémité (116) du deuxième bras (16) l'écartant de l'axe de coupe (4) pour une obliquité (A) de la deuxième face de butée (16A) par rapport à l'axe de coupe (4) comprise entre 0° et 90° C à partir de la position dans laquelle ladite deuxième face de butée (16A) est parallèle à l'axe de coupe (4).

6. Machine selon l'une quelconque des revendications 1 à 5,
caractérisée en ce que la face principale de butée (6) du bâti (1) est munie d'une fente (8) de réception d'une arête (9) d'un carreau à couper (3), centrée dans un plan perpendiculaire au fond du bâti et contenant l'axe de coupe.

7. Machine selon la revendication selon l'une quelconque des revendications,
caractérisée en ce que le bâti (1) comporte deux dispositifs (10) d'immobilisation du support (11), qui sont disposés de part et d'autre de l'axe de coupe (4), l'un quelconque de ces deux dispositifs d'immobilisation étant apte à immobiliser ledit support (11).

8. Machine selon l'une quelconque des revendications 1 à 7,
caractérisée en ce que le bâti (1) est muni d'une première graduation (7), qui s'étend parallèlement à la direction (T) de coulissement du support (11) et qui est susceptible d'indiquer la distance (L3B) séparant la première face de butée (15A) du bras (15) de l'axe de coupe (4).

9. Machine selon la revendication 8,
caractérisée en ce que le support (11) du bras (15) est lui-même muni d'une deuxième graduation (13) mobile en regard d'au moins un repère (14) que comporte le bâti (1), l'échelle de cette deuxième graduation (13) étant identique à celle de la première graduation (7), ladite deuxième graduation (13) s'étendant en sens inverse de la première graduation (7) et ayant une valeur d'origine (G13), qui, est identique à la valeur (G7) de fin de la première graduation (7), de sorte qu'une distance (L3B) de la première face de butée (15A) à l'axe de coupe (4) supérieure à la valeur (G7) de fin de la première graduation (7) est susceptible d'être mesurée par lecture de la position relative de la deuxième graduation (13) en regard dudit repère (14).
